# EUROPEAN PATENT APPLICATION

(11) **EP 2 282 153 A1**
(43) Date of publication of application: **09.02.2011**
(21) Application number: 09163901.3
(22) Date of filing: 26.06.2009
(51) Int. Cl.: F28D 20/00, F24D 3/08

(54) **Dual tank for room and tap water heating**

(71) Applicant: OS Teknik, 6100 Haderslev (DK)
(72) Inventor: Skovshoved, Ole, 6100, Haderslev (DK)
(74) Representative: Orsnes, Henrik Egede

(57) **Abstract**

There is provided a dual tank for combined water heating and space heating. The dual tank includes a water heating unit and a space heating unit, wherein these units are configured as an interior tank and an exterior tank, respectively. The water heating unit has a water storage tank, heating means for heating water stored in the tank and preferably first temperature sensing means for sensing water temperature in the tank. The first electrical signal indicates a demand for water heating. The space heating unit partially encloses the water heating unit allowing heat to dissipate from the water heating unit to the space heating unit. The water heating unit has an inlet and outlet for connection to a circuit, which delivers hot water to an indoor space through e.g. radiators.

## Description

### FIELD OF INVENTION

This invention relates generally to a heating apparatus and in particular to a combined hot water heating and space heating apparatus.

### BACKGROUND OF THE INVENTION

Due to the continually increasing cost of fuel, such as oil and natural gas, greater emphasis has been placed on fuel efficiency in the design and construction of heating apparatus, such as furnaces and water heaters. One development has been the replacement of the conventional pilot light with either direct spark ignition, intermittent pilot ignition or hot surface ignition. Another development has been the use of a helically wound tubular heat exchanger to circulate the products of combustion through a hot water storage tank, by which heat is transferred from the products of combustion to the water in the tank.

Combination water heating and space heating apparatus, as shown, for example, in U.S. Pat. Nos. 4,541,410, 4,641,631, and 4,766,883, are known in the art. In such combination apparatus, hot water is circulated between a hot water storage tank and a hydronic heat exchanger coil located in an air supply duct to heat the air passing over the heat exchanger coil, thereby providing heated air to an indoor space. One problem associated with such prior art combination apparatus is the allocation of hot water between space heating and the normal hot water supply (e.g., hot water for domestic use). If there is a concomitant demand for space heating and for domestic hot water (e.g., showers, laundry, dishwasher, etc.), the hot water supply may be insufficient to satisfy the demand. Another problem is that the combustion chamber of the water heater is typically located at the bottom of the tank. As such, water in the tank is in direct contact with the sides and top of the combustion chamber, but not the bottom, thereby detracting from the efficiency of the apparatus.

Further, water heated at the bottom of the tank rises to the top of the tank and is replaced by colder water sinking to the bottom of the tank. This natural convection is advantageous in terms of circulating water throughout the tank, but is disadvantageous in terms of being able to rapidly heat water to a desired temperature for immediate use (e.g., for space heating).

There is, therefore, a need for an improved water heating apparatus and for an improved combination water heating and space heating apparatus.

### SUMMARY OF THE INVENTION

In accordance with the present invention a dual tank for combined water heating and space heating is provided.

The dual tank includes a water heating unit and a space heating unit, wherein these units are configured as an interior tank and an exterior tank, respectively. The water heating unit has a water storage tank, heating means for heating water stored in the tank and preferably first temperature sensing means for sensing water temperature in the tank. The first electrical signal indicates a demand for water heating. The space heating unit partially encloses the water heating unit allowing heat to dissipate from the water heating unit to the space heating unit. The water heating unit has an inlet and outlet for connection to a circuit, which delivers hot water to an indoor space through e.g. radiators. The heating water circuit is connected to an external heat pump or other heat source. A second temperature sensing means is preferably provided for sensing air temperature in the indoor space and for providing a second electrical signal in response to the air temperature being at least a second temperature increment below a second temperature setpoint corresponding to a desired air temperature. The second electrical signal indicates a demand for space heating. Water circulation means is preferably provided for circulating water between the exterior tank and the heat source. The dual tank is further provided with control means adapted to control the heating source and the water circulation means. The control means is responsive to the first electrical signal for controlling the heating means to heat the water in the water heating unit. The control means is responsive to the second electrical signal for controlling the water circulation means to supply heated water from the tank to the heat source. The control means is further responsive to the second electrical signal for raising the first temperature set point by a predetermined amount.

In accordance with another aspect of the invention, water circulation means is adapted to supply heated water from the exterior tank to a heat exchanger in a supply air duct and to return water from the heat exchanger to the tank.

In accordance with one embodiment of the invention, a water supply conduit communicates between the tank and the heat exchanger for supplying water from the tank to the heat exchanger and a water return conduit communicates between the tank and the heat exchanger for returning water from the heat exchanger to the tank. The water circulation means is cooperative with the supply and return conduits to provide a circumferential flow of water around the combustion chamber housing, thereby enhancing the transfer of heat from the combustion chamber to the water to be supplied to the heat exchanger for space heating.

Thus specifically the present invention provides a dual tank (1) for storing hot domestic water and water for space heating, said dual tank comprising:
- an interior tank (2) for storing hot domestic water, said interior tank (2) provided with inlet and outlet;
- an exterior tank (3) for storing water for space heating, said exterior tank (3) provided with inlet and outlet;
wherein the exterior tank (3) encloses between 10% and 60% of the surface area of the interior tank (2).

Preferably theinterior tank (2) and the exterior tank (3) are concentric closed water cylinders manufactured from stainless steel. It is preferred that the exterior tank (3) encloses between 20% and 50% of the surface area of the interior tank (2). Moreover, it is preferred that the volume of the exterior tank (3) constitutes 20-50 % of the volume of the interior tank (2).

In a preferred embodiment of the present invention the interior tank (2) is provided with an immersion heater selected from the group consisting of an electrical heating unit, a solar heat exchanger, and a heat pump.

In another preferred embodiment the interior tank (2) has a frusto-conical top and bottom portion and a substantially cylindrical main body portion. It is also preferred that the inlet of the interior tank (2) is provided in the bottom portion, and the outlet of the interior tank (2) is provided in the top portion. It is also preferred that the exterior tank (3) has a frusto-conical bottom portion and a substantially cylindrical main body portion, and that the inlet and outlet of the exterior tank (3) is provided in the bottom and top portion, respectively. It is important that the top of the exterior tank (3) fits the circumference of the substantially cylindrical main body portion of the interior tank (2).

The combination apparatus according to the present invention provides energy-efficient space heating and water heating. The control means of the apparatus may be adapted to control the allocation of hot water to give priority to the potable water supply over space heating if the water temperature in the storage tank drops below a minimum temperature threshold. In a preferred embodiment, the minimum temperature threshold is a predetermined third temperature increment (which is greater than the first temperature increment) below the first temperature setpoint. When this low temperature condition occurs, hot water from the tank will not be circulated to the heat exchanger in the supply air duct, even if the second electrical signal indicating a demand for space heating is present. The apparatus is programmed to try to prevent this condition from occurring by anticipating the hot water needed to satisfy a space heating demand. In response to a space heating demand, the first temperature setpoint is raised by a predetermined amount, such that a demand for space heating will usually trigger the tank heating operation, even if the water in the tank is already at the original first temperature setpoint when the demand for space heating occurred.

Summarised the domestic hot water is heated and stored in a stainless steel vessel, which is immersed within a stainless steel buffer tank containing water for space heating. This provides not only exceptional efficiency, but ensures thorough and even heating of domestic hot water.

### BRIEF DESCRIPTION OF THE DRAWINGS

Figure 1 shows a cross sectional view of the dual tank according to the present invention.
Figure 2 shows a diagrammatic drawing of the heat profiles governing the dual tank of the present invention.

### DETAILED DESCRIPTION OF THE INVENTION

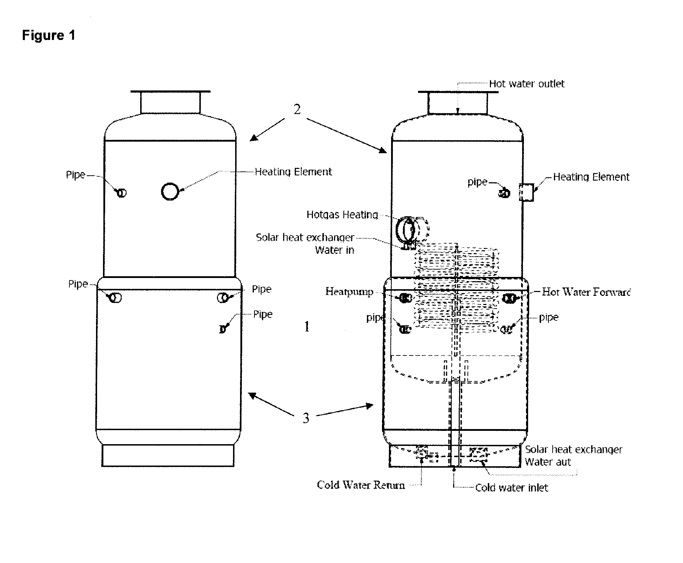

Refering to FIG. 1 there is shown a cross sectional view of the dual tank according to the present invention. The dual tank (1) comprises an interior tank (2) for storing hot domestic water, said interior tank (2) provided with inlet and outlet, and an exterior tank (3) for storing water for space heating, said exterior tank (3) provided with inlet and outlet. As appears from the figure the exterior tank encloses about 30% of the surface area of the interior tank (2).

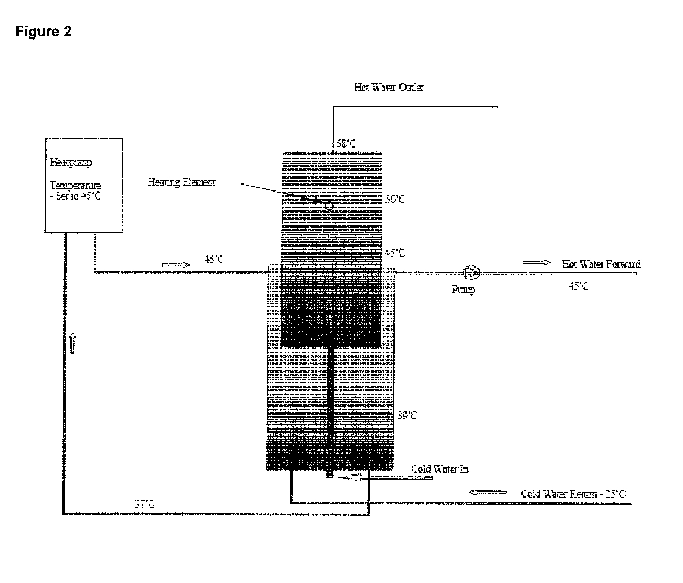

Referring to Figure 2 there is shown a diagram of the heat profiles governing the dual tank. Heated water (from a heat pump) enters the top portion of the exterior tank and partially transfers heat energy to the bottom portion of the interior tank. In both tanks heated water spontaneously flows to the top parts of the tanks. In the interior tank heated water exits the top portion through an outlet and is used as domestic water. In the exterior tank heated water exits the top portion of the tank through an outlet and is used for space heating. Both tanks are provided with inlets in the bottom parts of the tanks. To ensure a high temperature in the interior tank a heating element is provided herein.

## Claims

1. Dual tank (1) for storing hot domestic water and water for space heating, said dual tank comprising:
• an interior tank (2) for storing hot domestic water, said interior tank (2) provided with inlet and outlet;
• an exterior tank (3) for storing water for space heating, said exterior tank (3) provided with inlet and outlet;
wherein the exterior tank (3) encloses between 10% and 60% of the surface area of the interior tank (2).

2. Dual tank (1) according to claim 1, wherein the interior tank (2) and the exterior tank (3) are concentric closed water cylinders.

3. Dual tank (1) according to claim 2, wherein the interior tank (2) and the exterior tank (3) are manufactured from stainless steel.

4. Dual tank (1) according to any one of the claims 1 to 3, wherein the exterior tank (3) encloses between 20% and 50% of the surface area of the interior tank (2).

5. Dual tank (1) according to any one of the claims 1 to 4, wherein the volume of the exterior tank (3) constitutes 20-50 % of the volume of the interior tank (2).

6. Dual tank (1) according to any one of the preceding claims, wherein the interior tank (2) is provided with an immersion heater (4) selected from the group consisting of an electrical heating unit, a solar heat exchanger, and a heat pump.

7. Dual tank (1) according to any one of the preceding claims, wherein the interior tank (2) has a frusto-conical top and bottom portion and a substantially cylindrical main body portion.

8. Dual tank (1) according to any one of the preceding claims, wherein the inlet of the interior tank (2) is provided in the bottom portion.

9. Dual tank (1) according to any one of the preceding claims, wherein the outlet of the interior tank (2) is provided in the top portion.

10. Dual tank (1) according to any one of the preceding claims, wherein the exterior tank (3) has a frusto-conical bottom portion and a substantially cylindrical main body portion.

11. Dual tank (1) according to any one of the preceding claims, wherein the inlet and outlet of the exterior tank (3) is provided in the cylindrical main body portion.

12. Dual tank (1) according to any one of the claims 7-11, wherein the top of the exterior tank (3) fits the circumference of the substantially cylindrical main body portion of the interior tank (2).
